# FASCICULE DE BREVET EUROPEEN

(11) **EP 2 108 256 B1**
(45) Date de publication et mention de la délivrance du brevet: **16.11.2011**
(21) Numéro de dépôt: 09305283.5
(22) Date de dépôt: 03.04.2009
(51) Int. Cl.: A01K 61/00

(54) **Dispositif d'élevage de mollusques de type lanterne japonaise**
Vorrichtung zum Züchten von Muscheln vom Typ japanische Laterne
Japanese lantern type device for farming molluscs

(30) Priorité: 08.04.2008 FR 0801915
(43) Date de publication de la demande: 14.10.2009
(73) Titulaire: F.T.G.C., 44340 Bouguenais (FR)
(72) Inventeur: Adrien, Michel, 85740 L'Epine (FR); Guieau, Jean-Philippe, 85360 La Tranche sur Mer (FR); Metenier, Pascal, 44120 Vertou (FR)
(74) Mandataire: Laget, Jean-Loup

(56) Documents cités:
- FR-A- 2 719 976
- FR-A- 2 841 741
- FR-A- 2 893 229
- US-A- 4 377 987

## Description

La présente invention concerne un dispositif d'élevage de mollusques, en particulier de coquillages, apte à être suspendu à une aussière ancrée en mer.

Elle concerne plus particulièrement un dispositif de type lanterne japonaise, comprenant au moins un plateau, support des mollusques à élever, un filet en forme de tube, à l'intérieur duquel est disposé ledit plateau ou la pluralité de plateaux à l'état superposé et, disposés au niveau du ou de chaque plateau, des moyens de maintien du filet en contact avec le plateau de manière à empêcher le passage de mollusques entre filet et bord périphérique du plateau.

L'élevage en mer de mollusques s'opère depuis de nombreuses années, notamment à l'aide de lanternes japonaises. Chaque lanterne est formée d'un filet en forme de tube, à l'intérieur duquel sont disposés une pluralité de plateaux à l'état superposé. Chaque plateau est généralement formé d'un anneau dont l'espace intérieur est fermé par un filet tendu, formant surface de réception des coquillages, en particulier des huîtres à élever. Le filet en forme de tube est maintenu serré contre le bord périphérique du plateau par couture pour empêcher tout passage de mollusques entre filet et bord périphérique du plateau.

L'inconvénient d'une telle solution, dans laquelle l'élément de serrage du filet sur le plateau est formé généralement par un fil de couture, est que l'opération de couture est fastidieuse. Pour supprimer cette opération de couture, il a été imaginé d'intégrer dans la tranche du plateau des crochets de retenue du filet au plateau.

L'inconvénient de ces crochets est qu'ils obligent à écarter d'une distance importante les lanternes entre elles pour éviter la déchirure d'un filet de lanterne par les crochets d'une lanterne adjacente.

Plus récemment, et comme l'illustre le brevet FR-2.719.976, il a été prévu d'équiper les plateaux de rebord, c'est-à-dire une partie en saillie d'au moins l'une des faces du plateau, ce rebord servant de surface d'appui d'un élément de serrage du filet contre ledit rebord du plateau, cet élément de serrage étant généralement formé d'un lien élastiquement déformable. L'avantage du rebord est de permettre d'accroître la surface d'appui de l'élément de serrage sur ledit plateau. L'inconvénient du rebord est qu'il constitue une zone de retenue et d'accumulation des résidus de sorte qu'un encrassement rapide du plateau est constaté. Il est alors nécessaire de procéder à un enlèvement du filet en forme de tube puis à un nettoyage du plateau afin d'éviter que l'accumulation de résidus constatée nuise à la croissance des coquillages.

L'arrière-plan technologique est quant à lui illustré par les documents FR-2.841.741, US-4.377.987 et FR-2.893.229.

Un but de la présente invention est de proposer un dispositif d'élevage du type précité dont la conception permet de supprimer les zones de retenue ou d'accumulation des résidus à la surface du plateau sans nuire au maintien du filet contre ledit plateau.

A cet effet, l'invention a pour objet un dispositif d'élevage de mollusques, en particulier de coquillages, suivant la revendication 1, apte à être suspendu à une aussière ancrée en mer, le dispositif, de type lanterne japonaise, comprenant au moins un plateau, support des mollusques à élever, un filet en forme de tube, à l'intérieur duquel est disposé ledit plateau ou la pluralité de plateaux à l'état superposé et, disposés au niveau du ou de chaque plateau, des moyens de maintien du filet en contact avec le plateau de manière à empêcher le passage de mollusques entre filet et bord périphérique du plateau, **caractérisé en ce que** le ou chaque plateau est exempt de rebord et en ce que les moyens de maintien du filet en contact avec le ou chaque plateau affectent la forme d'un cadre entourant ledit plateau et présentant, sur son pourtour intérieur, une gorge d'insertion du bord périphérique dudit plateau revêtu du filet, les flancs de la gorge comportant l'un, au moins une zone active d'appui du filet sur la face dite du dessus du plateau, l'autre, au moins une zone active d'appui du filet sur la face dite de dessous dudit plateau.

L'absence de rebord, c'est-à-dire de partie en saillie des faces du plateau, permet la suppression de zones d'accumulation et/ou de retenue de résidus. Parallèlement, la réalisation de moyens de maintien du filet en contact avec le plateau sous forme d'un cadre muni d'une gorge périphérique interne dont les flancs sont conformés à la manière des branchés d'une pince et enserrent ledit plateau, en particulier la face du dessus et la face du dessous du plateau dans sa zone revêtue du filet de sorte que plateau et filet sont pris en sandwich entre les flancs de la gorge permet, y compris en présence d'un plateau de faible épaisseur, de disposer de surfaces importantes d'appui du filet sur le plateau. On évite ainsi tout risque d'écartement intempestif du filet du bord dudit plateau.

La présence du cadre, qui s'apparente à un bourrelet périphérique externe du plateau, permet un positionnement rapproché desdites lanternes entre elles sans risque d'endommagement des lanternes.

L'invention sera bien comprise à la lecture de la description suivante d'exemples de réalisation, en référence aux dessins annexés dans lesquels :

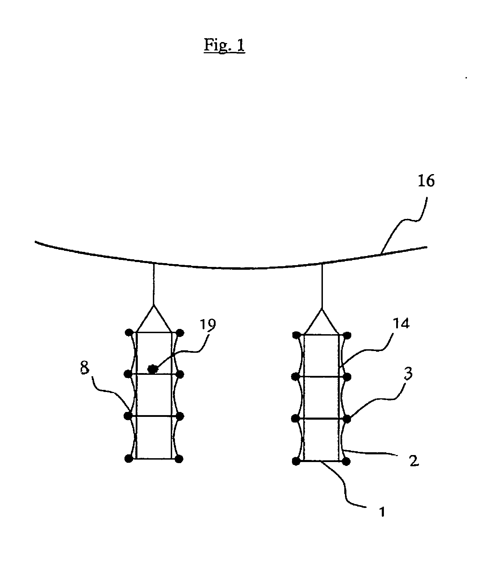

la figure 1 représente une vue schématique d'ensemble de dispositif d'élevage de mollusques suspendus à une aussière ;

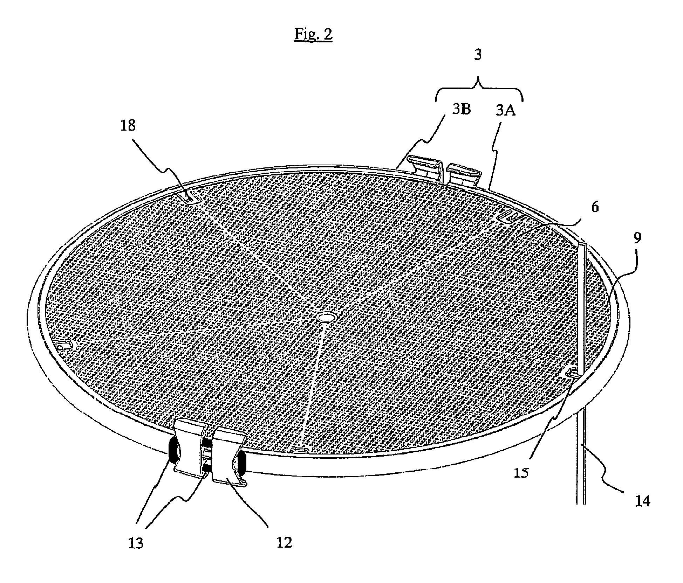

la figure 2 représente une vue d'ensemble d'un plateau équipé d'un filin partiellement représenté ;

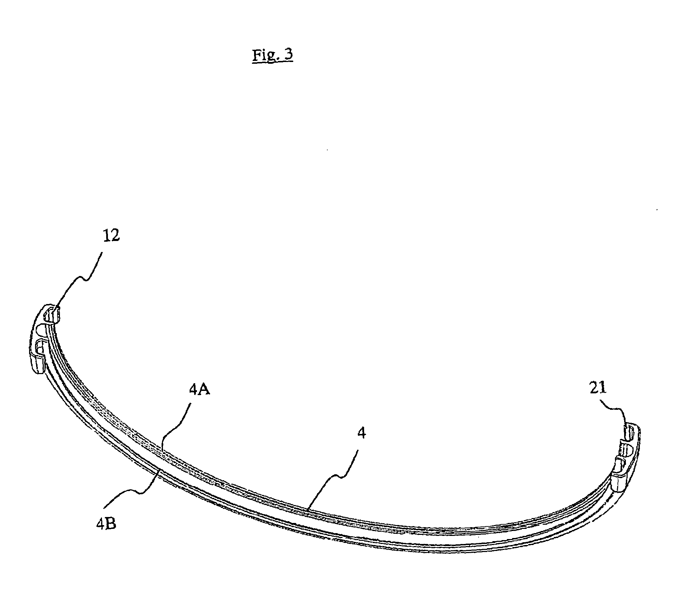

la figure 3 représente une vue en perspective d'un demi-cadre ;

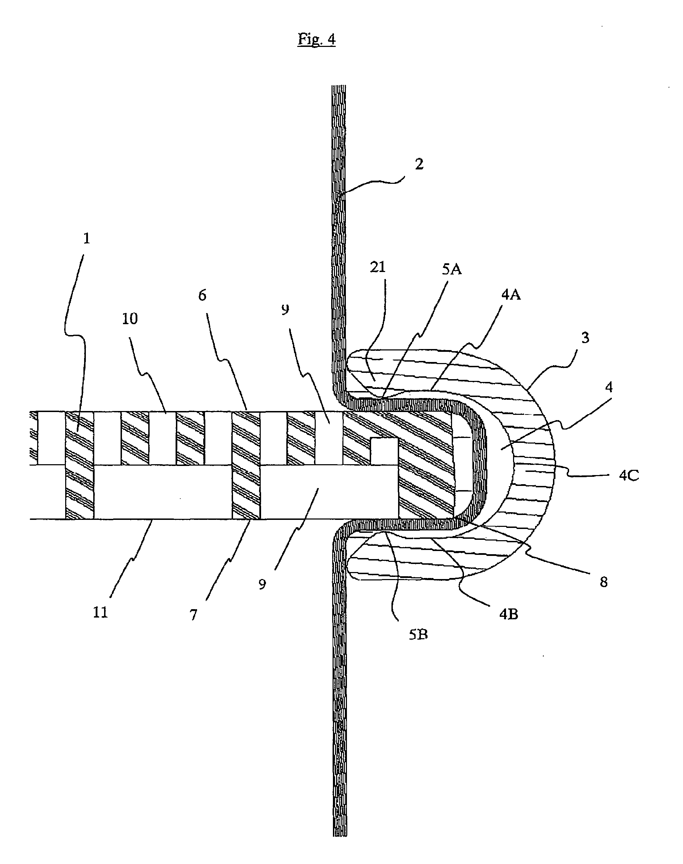

la figure 4 représente une vue partielle en coupe d'un dispositif d'élevage;

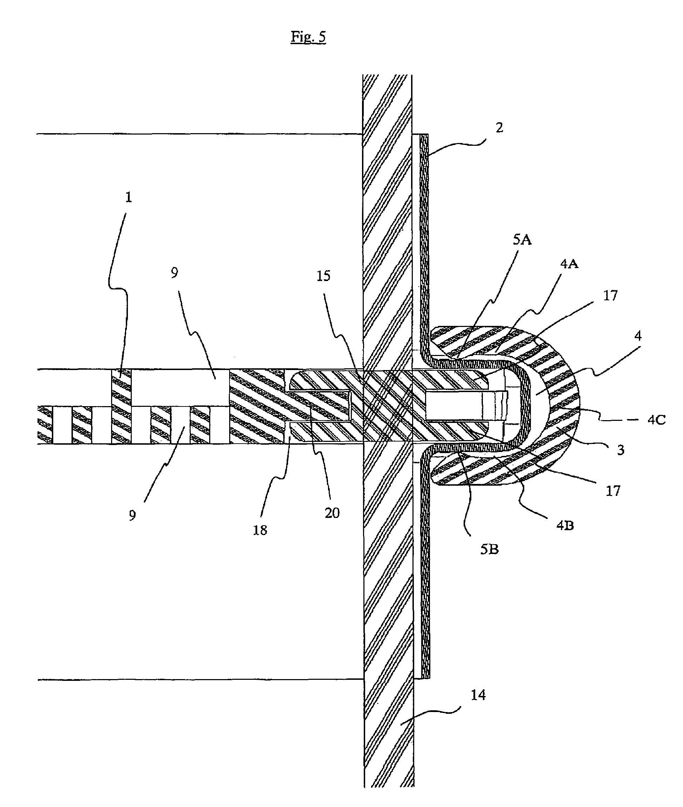

la figure 5 représente une vue partielle en coupe transversale d'un dispositif d'élevage prise au niveau d'un élément de blocage de filin à l'intérieur d'une ouverture du plateau et

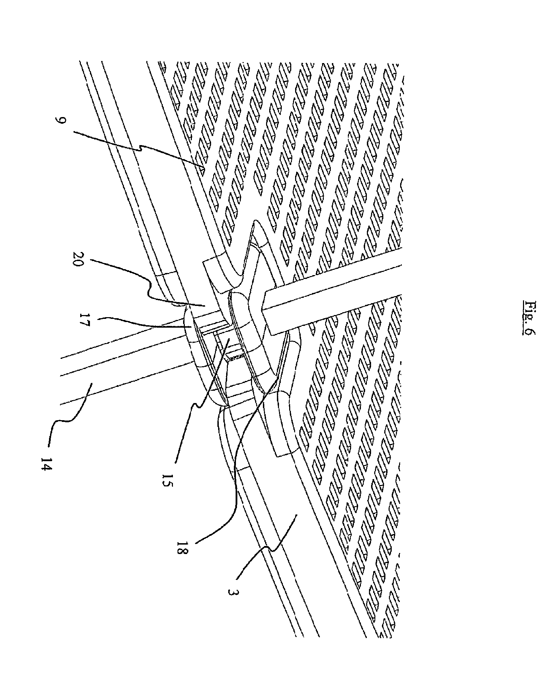

la figure 6 représente une vue partielle en perspective du plateau au niveau d'un élément de blocage du filin dans une ouverture dudit plateau.

Comme mentionné ci-dessus, le dispositif d'élevage de mollusques, en particulier de coquillages et notamment d'huîtres, objet de l'invention, est plus particulièrement destiné à être installé en mer et en particulier suspendu à une aussière 16 ancrée en mer. Ce dispositif comprend au moins un plateau 1, support des mollusques à élever, un filet 2 en forme de tube, à l'intérieur duquel est disposé ledit plateau 1 ou la pluralité de plateaux 1 à l'état superposé et, disposés au niveau du ou de chaque plateau 1, des moyens 3 de maintien du filet 2 en contact avec le plateau 1 de manière à empêcher le passage des mollusques disposés à la surface du plateau 1 dans la zone s'étendant entre filet 2 et bord 8 périphérique du plateau 1.

De manière caractéristique à l'invention, le ou chaque plateau 1 est exempt de rebord et les moyens 3 de maintien du filet 2 en contact avec le ou chaque plateau 1 affectent la forme d'un cadre 3 entourant ledit plateau 1 à l'état introduit du plateau 1 dans le filet 2 tubulaire. Ce cadre 3 comporte une gorge 4 périphérique interne à l'intérieur de laquelle s'insère le bord 8 périphérique du plateau 1 revêtu du filet 2. Les flancs 4A, 4B de la gorge 4 enserrent les faces 6 du dessus et 7 du dessous du plateau 1 et permettent ainsi d'appliquer le filet 2 entourant le plateau 1 contre la face 6 du dessus et la face 7 du dessous dudit plateau. A cet effet, les flancs de la gorge 4 comportent l'un, représenté en 4A aux figures, au moins une zone 5A active d'appui du filet 2 sur la face 6 dite de dessus du plateau 1, l'autre, représenté en 4B aux figures, au moins une zone 5B active d'appui du filet 2 sur la face 7 dite de dessous du plateau 1.

Dans les exemples représentés, chaque flanc 4A, 4B de la gorge 4 du cadre 3 est muni, sur sa face interne, d'au moins un renflement 21 annulaire, continu ou discontinu, dont le sommet forme la ou une zone 5A, 5B active d'appui du filet 2 contre une face du plateau 1. Bien évidemment, chaque flanc aurait pu, de manière équivalente, comporter plusieurs zones d'appui du filet contre une face du plateau.

Le cadre 3 affecte, en coupe transversale, un profil extérieur courbe en forme générale de C. Cette forme permet d'éloigner la paroi tubulaire formée par le filet 2 en forme de tube de la périphérie externe du plateau de sorte qu'un risque d'endommagement du filet 2 par une lanterne adjacente est réduit.

Pour permettre la mise en place du cadre autour du plateau 1, le cadre 3 est formé d'au moins deux demi-cadres 3A, 3B maintenus assemblés l'un à l'autre par au moins un organe 13 de liaison sectionnable. Bien évidemment, ce cadre peut être réalisé en un nombre d'éléments supérieur à deux. Toutefois, la pose d'un tel cadre est dans ce cas plus complexe.

Dans les exemples représentés, chaque demi-cadre 3A, 3B est équipé, à ou au voisinage de son extrémité de raccordement à l'autre demi-cadre, d'un organe de type crochet 12, le crochet 12 d'un demi-cadre étant relié au crochet 12 de l'autre demi-cadre par un lien 13 élastique entourant lesdits crochets, ledit lien 13 formant l'organe de liaison sectionnable entre les deux demi-cadres 3A, 3B. Ainsi, la mise en place de chaque demi-cadre autour du plateau s'effectue de manière aisée puisqu'il suffit d'insérer le bord 8 périphérique du plateau dans la gorge 4 de chaque demi-cadre 3A, 3B avant de maintenir les demi-cadres assemblés par l'intermédiaire d'au moins un lien 13 formant organe de liaison entre les deux demi-cadres. Généralement, les demi-cadres sont préassemblés à l'une de leurs extrémités par l'intermédiaire d'un premier lien 13 formant un organe de liaison sectionnable entre les deux demi-cadres, l'autre organe de liaison, destiné à maintenir assemblées les extrémités opposées des deux demi-cadres, étant positionné une fois les demi-cadres disposés autour du plateau 1 et entourant ce dernier. Pour l'enlèvement du cadre, il suffit de sectionner au moins l'un, de préférence chaque lien 13 de liaison des demi-cadres entre eux.

Dans les exemples représentés et de manière en soi connue, le plateau 1 est un plateau réversible ajouré muni d'ouvertures 9 traversantes débouchant d'une part dans la face 6 du dessus, d'autre part, dans la face 7 de dessous dudit plateau 1. De manière caractéristique à l'invention, la section de passage du ou de chaque débouché 10 des ouvertures 9 dans l'une des faces est de dimension inférieure à la section de passage du ou de chaque débouché 11 des ouvertures dans l'autre face de manière à former un plateau adaptable à une large plage dimensionnelle de mollusques. En effet, la face du plateau équipée des ouvertures, dont le débouché 11 est de dimension inférieure au débouché 10 des ouvertures de l'autre face, est destinée à accueillir les mollusques les plus jeunes lors de leur première période de croissance. Lorsque cette première période de croissance est achevée, le plateau est alors retourné pour utiliser, à titre de face support des mollusques, la face du plateau dont le débouché 11 des ouvertures présente la plus grande section de passage. Ce retournement du plateau peut s'opérer par retournement de l'ensemble du dispositif d'élevage et en le suspendant tête bêche.

Dans les exemples représentés, les ouvertures 9 traversantes se divisent dans l'épaisseur du plateau. Ainsi, le débouché 11 de l'ouverture 9 traversante dont la section de passage est importante se divise en trois ouvertures sur l'autre face du plateau, la section de passage du débouché de chacune des ouvertures dans cette autre face étant bien évidemment de dimension inférieure. Il aurait pu également être prévu des ouvertures de forme générale conique ou pyramidale de type ziggourat à section de passage croissant d'une face à une autre dudit plateau.

Pour permettre le maintien à l'état suspendu du dispositif, ce dernier comporte des moyens de suspension à une aussière 16 formés de filin(s) 14 et d'éléments 15 de blocage du ou de chaque filin 14 à l'intérieur d'ouvertures 18 ménagées dans le ou les plateau(x), lesdits éléments 15 de blocage étant fixés au(x) filin(s) 14. Dans les exemples représentés, chaque élément 15 de blocage est, pour sa fixation à un filin 14, surmoulé sur ledit filin 14. Chaque ouverture 18 du plateau 1 est quant à elle formée d'une encoche 18 radiale externe du plateau 1 à l'intérieur de laquelle un élément 15 de blocage du filin 14 est introduit radialement. Chaque élément 15 de blocage est maintenu dans l'encoche 18 correspondante du plateau 1 par le cadre 3 formant moyen de maintien d'une part, du filet 2 contre les faces du dessus et du dessous du plateau 1 et d'autre part, de l'élément 15 de blocage du filin 14 à l'intérieur de l'encoche 18 du plateau 1. Grâce à cette disposition, le cadre 3 est donc polyvalent et est apte à exercer plusieurs fonctions. La présence d'ouvertures radiales externes au niveau du plateau 1 facilite la mise en place des éléments 15 de blocage du filin 14 puisqu'il suffit d'insérer radialement ces éléments de blocage à l'intérieur desdites ouvertures. De même, l'enlèvement des éléments de blocage du plateau s'avère extrêmement aisé puisqu'il suffit d'exécuter un déplacement inverse.

Dans les exemples représentés, chaque encoche 18 est pourvue d'un épaulement 20 périphérique interne disposé, de préférence dans le plan diamétral médian dudit plateau 1. Chaque élément 15 de blocage affecte quant à lui la forme d'un manchon immobilisé axialement sur le filin 14, chaque manchon étant équipé de deux collerettes 17 décalées axialement le long dudit manchon, lesdites collerettes 17 s'étendant l'une d'un côté, l'autre de l'autre côté dudit épaulement 20 à l'état introduit de l'élément 15 de blocage dans l'encoche 18 correspondante du plateau. La présence des deux collerettes 17 permet d'immobiliser axialement l'élément de blocage par rapport à un axe orthogonal au plan général dudit plateau 1. Cette disposition participe à la réversibilité du plateau. Du fait de l'absence de rebord au niveau du plateau et de la possibilité de retourner le plateau au fur et à mesure de la croissance des mollusques, il est possible de supprimer toute opération de maintenance desdits plateaux qui nécessitait jusqu'à présent l'ouverture du filet 2, le nettoyage des plateaux après enlèvement des mollusques et la remise en place des mollusques. En effet, il suffira désormais de renverser la lanterne japonaise et de la suspendre tête en bas de sorte que les coquillages disposés sur l'une des faces du plateau viendront se positionner sur la face en regard d'un plateau adjacent superposé qui, normalement, présentera une section de passage au niveau du débouché des ouvertures de sa face support de réception des coquillages une plus grande dimension.

On note que dans les exemples représenté, le cadre 3 est monté flottant avec jeu autour du plateau 1. En d'autres termes, le cadre 3 présente un diamètre intérieur pris au niveau du fond 4C de sa gorge 4 largement supérieur au diamètre extérieur du plateau 1 de sorte que le cadre 3 peut glisser sur les faces du dessus et du dessous du plateau dans les zones revêtues du filet 2.

Dans les exemples représentés, le cadre 3 présente une gorge dont le profil intérieur est en forme de C ou de U.

Comme mentionné ci-dessus, le dispositif d'élevage, tel que décrit ci-dessus, est extrêmement aisé à mettre en place. En effet, il suffit dans un premier temps de positionner les éléments 15 de blocage à l'intérieur des ouvertures 18 prévues dans ledit plateau par simple introduction radiale des éléments de blocage dans lesdites ouvertures, ces éléments de blocage étant fixés sur les filins 14 et immobilisés axialement sur ces derniers. Les filins 14 peuvent ainsi, une fois fixés à leur extrémité libre, assurer la suspension desdits plateaux. Une fois les éléments 15 de blocage insérés dans les ouvertures 18, les plateaux 1 reliés l'un à l'autre par les filins 14 sont disposés à l'intérieur d'un filet 2 en forme de tube formant une gaine autour desdits plateaux superposés. Le ou chaque cadre 3 peut ensuite être mis en place. A cet effet, les demi-cadres 3A, 3B sont positionnés autour de chaque plateau et reliés l'un à l'autre par un lien 13 de préférence élastiquement déformable. Une fois les demi-cadres mis en place au niveau de chaque plateau, le dispositif d'élevage est prêt à fonctionner. Les coquillages ont été mis en place sur lesdits plateaux préalablement à la mise en place du filet 2 en forme de tube. L'ensemble est ensuite suspendu à une aussière. Après une période de croissance variable en fonction du type de coquillage à élever, les lanternes peuvent être retournées, c'est-à-dire suspendues tête bêche de sorte que les coquillages reposant sur l'une des faces d'un plateau viennent se positionner sur la face d'un plateau adjacent. Le retournement du dispositif implique que la face du plateau, dont le débouché des ouvertures présentait une section de passage inférieure et qui constituait jusqu'à présent la face du dessus, devient la face du dessous et qu'inversement, la face du plateau dont la section de passage du débouché des ouvertures était de dimension supérieure devient la face du dessus dudit plateau. Les coquillages peuvent ainsi poursuivre leur croissance jusqu'à démontage du dispositif. Le démontage du dispositif s'opère de manière extrêmement aisée puisqu'il suffit de sectionner les liens 13 reliant les demi-cadres entre eux, d'enlever les cadres, d'enlever la gaine 2 puis de démonter chacun des plateaux par simple enlèvement des filins 14 reliant lesdites plateaux entre eux.

Au regard de ce qui précède, il s'avère que, tant le montage que le démontage d'un tel dispositif d'élevage, s'avèrent extrêmement aisés.

## Revendications

1. Dispositif d'élevage de mollusques, en particulier de coquillages, apte à être suspendu à une aussière (16) ancrée en mer, le dispositif, de type lanterne japonaise, comprenant au moins un plateau (1), support des mollusques à élever, un filet (2) en forme de tube, à l'intérieur duquel est disposé ledit plateau (1) ou la pluralité de plateaux (1) à l'état superposé et, disposés au niveau du ou de chaque plateau (1), des moyens (3) de maintien du filet (2) en contact avec le plateau (1) de manière à empêcher le passage de mollusques entre filet (2) et bord (8) périphérique du plateau (1),
**caractérisé en ce que** le ou chaque plateau (1) est exempt de rebord et **en ce que** les moyens (3) de maintien du filet (2) en contact avec le ou chaque plateau (1) affectent la forme d'un cadre (3) entourant ledit plateau (1) et présentant, sur son pourtour intérieur, une gorge (4) d'insertion du bord (8) périphérique dudit plateau (1) revêtu du filet (2), les flancs (4A, 4B) de la gorge (4) comportant l'un (4A), au moins une zone (5A) active d'appui du filet sur la face (6) dite du dessus du plateau, l'autre (4B), au moins une zone (5B) active d'appui du filet (2) sur la face (7) dite de dessous dudit plateau (1).

2. Dispositif selon la revendication 1,
**caractérisé en ce que** le cadre (3) affecte, en coupe transversale, un profil extérieur courbe en forme générale de C.

3. Dispositif selon l'une des revendications 1 et 2,
**caractérisé en ce que** chaque flanc (4A, 4B) de la gorge (4) du cadre (3) est muni, sur sa face interne, d'au moins un renflement (21) annulaire, continu ou discontinu, dont le sommet forme la ou une zone (5A, 5B) active d'appui du filet (2) contre une face du plateau (1).

4. Dispositif selon l'une des revendications 1 à 3,
**caractérisé en ce que** le cadre (3) est formé de deux demi-cadres (3A, 3B) maintenus assemblés l'un à l'autre par au moins un organe (13) de liaison sectionnable.

5. Dispositif selon la revendication 4,
**caractérisé en ce que** chaque demi-cadre (3A, 3B) est équipé, à ou au voisinage de son extrémité de raccordement à l'autre demi-cadre, d'un organe de type crochet (12), le crochet (12) d'un demi-cadre étant relié au crochet (12) de l'autre demi-cadre par un lien (13) élastique entourant lesdits crochets, ledit lien (13) formant l'organe de liaison sectionnable entre les deux demi-cadres (3A, 3B).

6. Dispositif selon l'une des revendications 1 à 5, du type dans lequel le plateau (1) est un plateau réversible ajouré muni d'ouvertures (9) traversantes débouchant d'une part, dans la face (6) du dessus, d'autre part, dans la face (7) de dessous, dudit plateau (1),
**caractérisé en ce que** la section de passage du ou de chaque débouché (10) des ouvertures (9) dans l'une des faces du plateau (1) est de dimension inférieure à la section de passage du ou de chaque débouché (11) des ouvertures dans l'autre face du plateau (1) de manière à former un plateau (1) adaptable à une large plage dimensionnelle de mollusques.

7. Dispositif selon l'une des revendications 1 à 6, du type dans lequel le dispositif comporte des moyens de suspension à une aussière (16) formés de filin(s) (14) et d'éléments (15) de blocage du ou de chaque filin (14) à l'intérieur d'ouvertures (18) ménagées dans le ou les plateau(x), lesdits éléments (15) de blocage étant fixés au(x) filin(s) (14),
**caractérisé en ce que** chaque ouverture (18) du plateau (1) est formée d'une encoche (18) radiale externe du plateau (1) à l'intérieur de laquelle un élément (15) de blocage du filin (4) est introduit radialement, ledit élément (15) de blocage étant maintenu dans l'encoche (18) correspondante du plateau (1) par le cadre (3) formant moyen de maintien d'une part, du filet (2) contre les faces du dessus et du dessous du plateau (1) et d'autre part, de l'élément (15) de blocage du filin (14) à l'intérieur de l'encoche (18) du plateau (1).

8. Dispositif selon la revendication 7,
**caractérisé en ce que** chaque encoche (18) est pourvue d'un épaulement (20) périphérique interne disposé, de préférence dans le plan diamétral médian dudit plateau (1), et **en ce que** chaque élément (15) de blocage affecte la forme d'un manchon immobilisé axialement sur le filin (14), chaque manchon étant équipé de deux collerettes (17) décalées axialement le long dudit manchon, lesdites collerettes (17) s'étendant l'une d'un côté, l'autre de l'autre côté dudit épaulement (20) à l'état introduit de l'élément (15) de blocage dans l'encoche (18) correspondante du plateau.

9. Dispositif selon l'une des revendications 7 et 8,
**caractérisé en ce que** chaque élément (15) de blocage est, pour sa fixation au filin (14), surmoulé sur ledit filin (14).

10. Dispositif selon l'une des revendications 1 à 9,
**caractérisé en ce que** le cadre (3) est monté flottant avec jeu autour du plateau (1).

## Claims

1. A device for farming mollusks, in particular shellfish, that can be suspended from a hawser (16) anchored in the sea, the device, of the Japanese lantern type, comprising at least one plate (1), support for the mollusks to be bred, a net (2) in the form of a tube, inside which said plate (1) or the plurality of plates (1) is arranged in the superimposed state and, arranged at the or each plate (1), means (3) for keeping the net (2) in contact with the plate (1) so as to prevent the passage of the mollusks between the net (2) and the peripheral edge (8) of the plate (1),
**characterized in that** the or each plate (1) does not have a rim and **in that** the means (3) for keeping the net (2) in contact with the or each plate (1) assume the shape of a frame (3) surrounding said plate (1) and having, on its inner perimeter, a groove (4) for insertion of the peripheral edge (8) of said plate (1) covered with the net (2), the flanks (4A, 4B) of the groove (4) one of said flanks (4A) including at least one active support zone (5A) for the net on the face (6) said to be on top of the plate, the other (4B) including at least one active support zone (5B) for the net (2) on the so-called bottom surface (7) of said plate (1).

2. The device according to claim 1,
**characterized in that** the frame (3) assumes, in transverse cross-section, a generally C-shaped curved outer profile.

3. The device according to one of claims 1 and 2,
**characterized in that** each flank (4A, 4B) of the groove (4) of the frame (3) is provided, on its inner face, with at least one annular bulge (21), continuous or broken, the apex of which forms the or an active support zone (5A, 5B) of the net (2) against a surface of the plate (1).

4. The device according to one of claims 1 to 3,
**characterized in that** the frame (3) is formed by two half-frames (3A, 3B) kept assembled together by at least one sectionable connecting member (13).

5. The device according to claim 4,
**characterized in that** each half-frame (3A, 3B) is equipped, at or near its connecting end to the other half-frame, with a hook-type member (12), the hook (12) of one half-frame being connected to the hook (12) of the other half-frame by an elastic connection (13) surrounding said hooks, said connection (13) forming the sectionable connecting member between the two half-frames (3A, 3B).

6. The device according to one of claims 1 to 5, of the type in which the plate (1) is a reversible openwork plate provided with through openings (9) emerging on the one hand in the top surface (6), on the other hand in the bottom surface (7), of said plate (1),
**characterized in that** the passage section of the or each outlet (10) of the openings (9) in one of the surfaces of the plate (1) has a smaller size than the passage section of the or each outlet (11) of the openings in the other surface of the plate (1) so as to form a plate (1) adaptable to a large size range of mollusks.

7. The device according to one of claims 1 to 6, of the type in which the device includes means for suspending a hawser (16) formed by ropes (14) and elements (15) for locking the or each rope (14) inside openings (18) formed in the plate(s), said locking element(s) (15) being fixed to the rope(s) (14),
**characterized in that** each opening (18) of the plate (1) is formed by an outer radial notch (18) of the plate (1) inside which an element (15) for locking the rope (4) is radially inserted, said locking element (15) being kept in the corresponding notch (18) of the plate (1) by the frame (3) forming means, on the one hand, for keeping the net (2) against the top and bottom surfaces of the plate (1) and on the other hand, the element (15) for locking the rope (14) inside the notch (18) of the plate (1).

8. The device according to claim 7,
**characterized in that** each notch (18) is provided with an inner peripheral shoulder (20) arranged, preferably in the middle diametric plane of said plate (1), and **in that** each locking element (15) assumes the shape of a sleeve axially immobilized on the rope (14), each sleeve being equipped with two skirts (17) axially offset along said sleeve, said skirts (17) extending one on one side, the other on the other side of said shoulder (20) in the inserted state of the locking element (15) in the corresponding notch (18) of the plate.

9. The device according to one of claims 7 and 8,
**characterized in that** each locking element (15) is, for its fastening to the rope (14), overmolded on said rope (14).

10. The device according to one of claims 1 to 9,
**characterized in that** the frame (3) is mounted floating with play around the plate (1).

## Patentansprüche

1. Vorrichtung zur Zucht von Weichtieren, insbesondere von Muscheln, die an einer im Meer verankerten Schleppleine (16) angehängbar ist, wobei die Vorrichtung in der Bauart einer japanischen Laterne mindestens eine Platte (1), die die zu züchtenden Muscheln trägt, ein röhrenförmiges Netz (2), in dem die Platte (1) oder die Vielzahl von Platten (1) übereinander angeordnet ist und auf Ebene der Platte oder jeder Platte (1) Mittel (3) zum Halten des Netzes (2) im Kontakt mit der Platte (1), um den Durchgang von Weichtieren zwischen dem Netz (2) und dem peripheren Rand (8) der Platte (1) zu verhindern, umfasst,
**dadurch gekennzeichnet, dass** die oder jede Platte (1) ohne Kante ist und dass die Mittel (3) zum Halten des Netzes (2) im Kontakt mit der oder jeder Platte (1) die Form eines die Platte (1) umgebenden Rahmens (3) aufweisen, der auf seinem inneren Umfang eine Höhlung (4) zum Einführen des peripheren Randes (8) der mit dem Netz (2) verkleideten Platte (1) aufweist, wobei von den Seiten (4A, 4B) der Höhlung (4) eine Seite (4A) mindestens eine aktive Stützzone (5A) des Netzes auf der Oberseite (6) der Platte und die andere Seite (4B) mindestens eine aktive Stützzone (5B) des Netzes (2) auf der Unterseite (7) der Platte (1) aufweist.

2. Vorrichtung nach Anspruch 1,
**dadurch gekennzeichnet, dass** der Rahmen (3) im Querschnitt ein C-förmig gekrümmtes Außenprofil aufweist.

3. Vorrichtung nach einem der Ansprüche 1 und 2,
**dadurch gekennzeichnet, dass** jede Seite (4A, 4B) der Höhlung (4) des Rahmens (3) auf ihrer Innenseite mit mindestens einer ringförmigen kontinuierlichen oder diskontinuierlichen Ausbauchung (21) ausgestattet ist, deren Spitze die oder eine aktive Stützzone (5A, 5B) des Netzes (2) gegen eine Seite der Platte (1) bildet.

4. Vorrichtung nach einem der Ansprüche 1 bis 3,
**dadurch gekennzeichnet, dass** der Rahmen (3) von zwei Halbrahmen (3A, 3B) gebildet wird, die durch mindestens ein trennbares Verbindungsorgan (13) miteinander verbunden gehalten werden.

5. Vorrichtung nach Anspruch 4,
**dadurch gekennzeichnet, dass** jeder Halbrahmen (3A, 3B) an seinem Anschlussende an den anderen Rahmen oder in dessen Nähe mit einem Organ vom Typ Haken (12) ausgestattet ist, wobei der Haken (12) eines Halbrahmens mit dem Haken (12) des anderen Halbrahmens durch eine die Haken umgebende elastische Verbindung (13) verbunden ist, wobei die Verbindung (13) das trennbare Verbindungsorgan zwischen den zwei Halbrahmen (3A, 3B) bildet.

6. Vorrichtung nach einem der Ansprüche 1 bis 5 der Bauart, bei der die Platte (1) eine durchbrochene umkehrbare Platte ist, die mit durchquerenden Öffnungen (9) ausgestattet ist, die einerseits in die Oberseite (6), andererseits in die Unterseite (7) der Platte (1) münden,
**dadurch gekennzeichnet, dass** der Durchgangsquerschnitt, der oder jeder Mündung (10) der Öffnungen (9) auf einer der Seiten der Platten (1) kleiner ist als der Durchgangsquerschnitt der oder jeder Mündung (11) der Öffnungen auf der anderen Seite der Platte (1), so dass eine Platte (1) gebildet wird, die für einen breiten Größenbereich von Weichtieren geeignet, ist.

7. Vorrichtung nach einem der Ansprüche 1 bis 6 der Bauart, bei der die Vorrichtung Mittel zum Anhängen an eine Schleppleine (16) aufweist, die von Leine/n (14) und von Blockierelementen (15) der oder jeder Leine in der oder in den in den Platten eingearbeiteten Öffnungen (18) gebildet werden, wobei die Blockiereiemente (15) au der/den Leine/n (14) befestigt sind,
**dadurch gekennzeichnet, dass** jede Öffnung (18) der Platte (1) von einer radial externen Einkerbung (18) der Platte (1) gebildet wird, in die ein Blockierelement (15) der Leine (4) radial eingeführt ist, wobei das Blockierelement (15) in der entsprechenden Einkerbung (18) der Platte (1) von dem Rahmen (3) gehalten wird, der einerseits ein Haltemittel des Netzes (2) gegen die Ober- und Unterseiten der Platte (1) und andererseits des Blockierelements (15) der Leine (14) in der Einkerbung (18) der Platte (1) bildet.

8. Vorrichtung nach Anspruch 7,
**dadurch gekennzeichnet, dass** jede Einkerbung (18) mit einem internen peripheren Vorsprung (20) ausgestattet ist, der vorzugsweise in der mittleren diametralen Ebene der Platte (1) angeordnet ist, und dass jedes Blockierelement (15) wie ein axial auf der Leine (14) unbeweglicher Stutzen geformt ist, wobei jeder Stutzen mit zwei entlang des Stutzens axial versetzten Ringen (17) ausgestattet ist, wobei sich im in die entsprechende Einkerbung (18) der Platte eingeführten Zustand des Blockierelements (15) ein Ring (17) auf der einen Seite und der andere Ring auf der anderen Seite des Vorsprungs (20) erstreckt.

9. Vorrichtung nach einem der Ansprüche 7 und 8,
**dadurch gekennzeichnet, dass** jedes Blockierelement (15) für seine Befestigung an der Leine (14) auf der Leine (14) überformt ist.

10. Vorrichtung nach einem der Ansprüche 1 bis 9,
**dadurch gekennzeichnet, dass** der Rahmen (3) gleitend mit Spiel um die Platte (1) montiert ist.
